Europäisches Patentamt

European Patent Office

Office européen des brevets

(11) Veröffentlichungsnummer: **0 509 500 A2**

## (12) EUROPÄISCHE PATENTANMELDUNG

(21) Anmeldenummer: **92106581.9**

(51) Int. Cl.⁵: **H04B 10/24**

(22) Anmeldetag: **16.04.92**

(30) Priorität: **19.04.91 CH 190/91**

(43) Veröffentlichungstag der Anmeldung:
**21.10.92 Patentblatt 92/43**

(84) Benannte Vertragsstaaten:
**AT CH DE ES FR GB IT LI NL SE**

(71) Anmelder: **ASCOM TECH AG**
**Freiburgstrasse 370**
**CH-3018 Bern 14(CH)**

(72) Erfinder: **Azizi, Ataollah, Dr.**
**Route de la Gruyère 23**
**CH-1700 Fribourg(CH)**

Erfinder: **Wang, Yu, Dr.**
**Rue de Pilettes 1**
**CH-1700 Fribourg(CH)**
Erfinder: **Altwegg, Laurenz, Dr.**
**Talstrasse 42**
**CH-3122 Kehrsatz(CH)**
Erfinder: **Wyler, Frank**
**Mettlenwaldweg 18i**
**CH-3037 Herrenschwanden(CH)**

(74) Vertreter: **Schwerdtel, Eberhard, Dr.**
**Ascom Tech AG Gewerblicher Rechtsschutz**
**Freiburgstrasse 370**
**CH-3018 Bern(CH)**

(54) **Vorrichtung zur bidirektionalen, zeitgleichen Übertragung digitaler Information.**

(57) Die Vorrichtung dient zum zeitgleichen bidirektionalen Übertragen von Information, die von zwei Informationsquellen (11, 12) stammt und für zwei Informationssenken (21, 22) bestimmt ist. Hierzu sind eine einzige Lichtleitfaser (15) vorgesehen, zwei Sender (31, 32), zwei Empfänger (51, 52) und zwei in die Faser (15) eingefügte Richtkoppler (17, 18). Im einen Sender (31) befindet sich ein direkt modulierbarer Laser (34), im anderen Sender (32) ein Reflektor (44), der aus dem ankommenden Lichtstrahl (V) durch Spiegeln einen abgehenden Strahl (R) bildet.

Der Laser (34) wird so moduliert, dass sich durch Intensitätsmodulation des Strahles V ein Träger bildet, dem durch Frequenz- oder Phasenmodulation das Informationssignal aufmoduliert ist. Der zweite Sender (32) moduliert den Strahl R in direkter Intensitätsmodulation.

Zur Verbesserung des Signal/Rausch-Verhältnisses dient im zweiten Empfänger (52) ein Filter (56), das den Frequenzbereich des Trägers sperrt. Dieses Filter kann als einfacher elektrischer Tiefpass ausgebildet sein.

Fig. 1

EP 0 509 500 A2

Die Erfindung betrifft eine Vorrichtung zur bidirektionalen zeitgleichen Übertragung von Information über eine einzige Lichtleitfaser entsprechend dem Oberbegriff von Anspruch 1. Sie betrifft weiter die Verwendung dieser Vorrichtung.

Optische Übertragungseinrichtungen sind heute allgemein bekannt. Neben optischen Punkt/Punkt-Verbindungen gibt es auch kompliziertere Netzstrukturen. So beschreibt z.B. B. Viklund in einem Artikel "Optical fibres in local area networks", Communications/Communications International, October 1985, Seite 19 ff. verschiedene Netzstrukturen mit Glasfaserkabeln für Verteilnetze und für Netze mit individuell aufbaubaren Verbindungen zwischen diversen Teilnehmern.

Aus P.J. Duthie et al., "Bidirectional Fibre-Optic Link Using Reflective Modulation", Electronics Letters, 8th May 1986, Vol. 22, No. 10, pp. 315-318 ist eine optische Punkt/Punkt-Verbindung bekannt, die nur eine einzige Lichtleitfaser und einen einzigen Laser als Lichtquelle benötigt. Für die Rückübertragung ist am einen Ende der Faser ein Reflektor angeordnet, der den ankommenden Lichtstrahl zurückreflektiert. In der Vorwärtsrichtung wird der Lichtstrahl mit einer sehr hohen Bitfrequenz moduliert, in der Rückwärtsrichtung mit einer vergleichsweise erheblich tieferen Bitfrequenz. Über Optokoppler an den Enden der Faser werden der Vorwärts- und der Rückstrahl so getrennt, dass von den Sendern jeweils genügend zugeordnetes Licht zu den Empfängern gelangt.

Die genannte bidirektionale Optoverbindung weist verschiedene Mängel auf. Zum einen ist sie nur zum Übertragen ungleicher Bitraten in den verschiedenen Richtungen geeignet. Sodann ist das Signal/Rausch-Verhältnis ungünstig und hierdurch die maximale Übertragungslänge beschränkt. Weiter muss in der ersten Übertragungsrichtung ein Code verwendet werden, bei dem lange Passagen des gleichen Logikwertes 0 oder 1 keine vollständige Auslöschung des Lichtstrahles bewirken, beispielsweise der CMI-Code (Coded Mark Inversion). Dies bewirkt eine Verminderung der ausnützbaren Bitrate um den Faktor 2. Insgesamt erscheint die Verbindung für den Einsatz in der Praxis nicht reif.

Die Aufgabe der Erfindung besteht nun darin, eine praktisch einsetzbare optische Punkt/Punkt-Verbindung anzugeben, die mit einer einzigen Faser für beide Übertragungsrichtungen auskommt, die preiswert ist und hohen Sicherheitsaspekten genügt. Die Verbindung soll weiter geeignet sein für die Verwendung zusammen mit anderen optischen Übertragungseinrichtungen, die ebenfalls diese einzige Faser verwenden.

Die Lösung dieser Aufgabe wird durch den kennzeichnenden Teil der unabhängigen Ansprüche gegeben. Die abhängigen Ansprüche geben Ausgestaltungen der Erfindung an.

Die Lösung ist einfach und erfüllt die eingangs gestellten Forderungen. Sie besitzt darüber hinaus den wesentlichen Vorteil, dass ihr Aufbau zum erheblichen Teil mittels integrierter optischer und elektronischer Elemente auf gemeinsamen Trägern (Chip) möglich ist. Dies erlaubt eine rationelle Fertigung und vermindert die Anzahl erforderlicher optischer Stecker, Spleisse bzw. Faseranschlüsse.

Im folgenden wird die Erfindung anhand von drei Figuren beispielsweise näher beschrieben. Es zeigen:

Fig. 1 - Blockschaltbild einer optischen Übertragungseinrichtung;

Fig. 2 - Schleifenförmiger Reflektor;

Fig. 3 - Erweitertes Blockschaltbild der Übertragungseinrichtung.

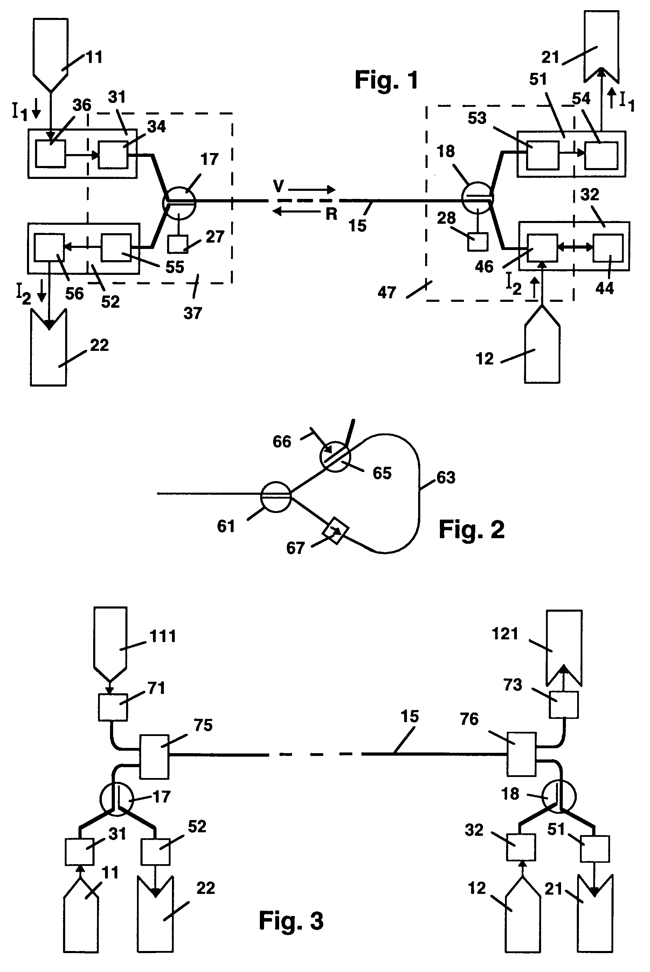

Figur 1 zeigt ein grundsätzliches Blockschaltbild einer optischen Übertragungsvorrichtung zur birektionalen Verbindung zweier digitaler Informationsquellen 11, 12 mit zugeordneten Informationssenken 21, 22, die über eine einzige Lichtleitfaser 15, insbesondere eine Monomodefaser gegenläufig miteinander verbunden sind. Die Faser 15 kann einige bis viele Kilometer lang sein, z.B. 20 km. An den Enden der Faser 15 sind je eine Richtkoppler 17, 18 so in die Faser 15 eingefügt, dass sich ein über die Faser 15 ankommender Lichtstrahl in zwei Teilstrahlen aufteilt. Das Verhältnis der Aufteilung kann je nach der Art des Richtkopplers fest gegeben sein, z.B. bei verschweissten Fasern. Oder das Verhältnis wird jeweils durch einen zugehörigen Regulator 27, 28 geeignet und fest eingestellt, insbesondere bei Richtkopplern auf der Basis von z.B. Galliumarsenid oder Lithiumniobat.

Die Informationsquelle 11 ist mit einem ersten Sender 31 verbunden. Dieser umfasst einen Laser 34 als Lichtquelle, der einen ersten Lichtstrahl V (vorwärts) in der einen Übertragungsrichtung auf die Faser 15 aussendet. Der Sender 31 umfasst weiter einen ersten Modulator 36, der den Lichtstrahl V durch Beeinflussung des Lasers 34 moduliert. Diese Beeinflussung erfolgt im Bittakt T1 der Information I1 der ersten Informationsquelle 11, wobei die Art der Modulation später beschrieben wird.

In analoger Weise ist die zweite Informationsquelle 12 mit einem zweiten Sender 32 verbunden. Dieser Sender umfasst einen Reflektor 44, der den von der Lichtleitfaser 15 herkommenden ersten Lichtstrahl V umkehrt und als zweiten Lichtstrahl R (rückwärts) in der anderen Übertragungsrichtung wiederaussendet. Der zweite Sender 32 umfasst weiter einen zweiten Modulator 46, der im Bittakt T2 der Information I2 der zweiten Informationsquelle 12 arbeitet und den zweiten Lichtstrahl R moduliert.

Räumlich eng mit dem zweiten Sender 32 verbunden ist der erste Empfänger 51. Dieser umfasst einen optoelektrischen Wandler 53 mit einem elektrisch arbeitenden, nachgeschalteten Demodulator 54. Der Wandler 53 und der Demodulator 54 erkennen die im ankommenden Lichtstrahl V enthaltene Information I1 und geben diese an die nachgeschaltete erste Informationssenke 21 ab.

Der zweite Empfänger 52 ist mit dem ersten Sender 31 räumlich eng verbunden und umfasst ebenfalls einen optoelektrischen Wandler 55, der gleich wie der Wandler 53 aufgebaut sein kann, beispielsweise als Fotodiode mit nachgeschaltetem Verstärker. Der Empfänger umfasst weiter ein elektrisch wirkendes Filter 56, das dem Wandler 55 nachgeschaltet ist. Dieses Filter 56 ist so ausgelegt, dass es den Frequenzbereich eines noch zu beschreibenden Trägers sperrt. Der Ausgang des Filters 56 ist schliesslich mit der zweiten Informationssenke 22 verbunden.

Die Vorrichtung arbeitet wie folgt: Der Laser 34 schickt dauernd den ersten Lichtstrahl V in der einen Übertragungsrichtung über die Lichtleitfaser 15. Dieser Strahl wird im einen Richtkoppler 18 aufgeteilt. Der eine Teil des Lichtstrahles erreicht den ersten Empfänger 51. Der andere Teil erreicht den zweiten Sender 32, wird durch den Reflektor 44 zurückgespiegelt und gelangt als zweiter Lichtstrahl R wieder auf die Faser 15, diesmal in der umgekehrten Richtung. Hierbei ändert sich die Wellenlänge des Lichtes nicht, so dass auf der Faser 15 dauernd zwei entgegengesetzt laufende Lichtstrahlen V, R gleicher Wellenlänge vorhanden sind. Der in der anderen Übertragungsrichtung laufende Lichtstrahl R wird durch den anderen Richtkoppler 17 aufgesplittet. Ein geringer Teil dieses Strahles R gelangt hierdurch zurück zum Laser 34. Der übrige Teil erreicht den zweiten Empfänger 52.

Zur Übertragung der digitalen Information der ersten Informationsquelle 11 moduliert der erste Modulator 36 den Laser 34 im Bittakt T1 dieser Quelle 11, z.B. mit 2 Mbit/s. Die Modulation erfolgt so, dass für den einen logischen Wert O der Information eine erste Frequenz f1 auf dem Lichtstrahl V erscheint und für den anderen logischen Wert 1 eine zweite Frequenz f2. Hierdurch ergibt sich eine Frequenzumtastung des Lichtstrahles V, d.h. eine mehr oder weniger tiefe Ein/Aus-Modulation des Lichtstrahles V mit zwei unterschiedlichen Frequenzen f1, f2 im Takt T1 der Informationsquelle 11, wobei dieser Takt T1 wesentlich kleiner ist als die beiden Frequenzen f1, f2.

Der erste Empfänger 51 empfängt den ersten Lichtstrahl V, demoduliert die übertragene Information I1 und liefert diese an die erste Informationssenke 21.

Bei der beschriebenen Art der Modulation bildete der Mittelwert der beiden Frequenzen f1, f2 eine Trägerfrequenz f. Die Intensitätsmodulation des ersten Lichtstrahles V mit dieser Frequenz kann als "Träger" aufgefasst werden, dem die digitale Information I1 der ersten Informationsquelle 11 aufmoduliert ist.

Die Intensitätsmodulation als solche kann rechteckförmig sein. Dies hat jedoch den Nachteil, dass das zugeordnete Signalspektrum sehr hohe Frequenzanteile aufweist. Vorteilhafter ist eine Modulation, die abgerundete Flanken zwischen den Hell- und den Dunkelbereichen aufweist. Eine solche Modulation kann beispielsweise angenähert sinusförmig geformt sein.

Der zweite Sender 32 moduliert den zweiten Lichtstrahl R durch direkte Ein/Aus-Modulation im Takt T2 der zweiten Informationsquelle 12, der gleich sein kann dem Takt T1 der ersten Quelle 11. Der modulierte zweite Lichtstrahl R wird durch den zweiten Empfänger 52 empfangen und die Information zur zweiten Informationssenke 22 weitergegeben. Das Filter 56 siebt hierbei einen Frequenzbereich heraus, der die Frequenzen f1, f2 umfasst und sperrt damit alle Signalanteile, die vom ersten Sender 31 stammen. Dies verbessert das Signal/Rausch-Verhältnis wesentlich. Weiter reduziert das Filter 56 den Einfluss von Streulicht. Dieses entsteht aus dem ersten Lichtstrahl V vor allem durch Rückstreuung an Fehlstellen des Lichtpfades, insbesondere an Steckern und Spleissstellen.

Die beschriebene direkte Intensitätsmodulation der Laser-Lichtquelle 34 durch den ersten Modulator 36 bewirkt bei diesem Laser eine ständige Frequenzvariation. Dieser an sich bekannte Effekt hat nun den Vorteil, dass sich hierdurch die wirksame Kohärenzlänge des Lichtes verkürzt. Dies hat zur Folge, dass das Licht des ersten und des zweiten Strahles V, R weniger miteinander interferiert. Auch hierdurch verringert sich das Rauschen (Geräusch) beim zweiten Empfänger 52 gegenüber dem Zustand bei anderen Modulationsarten wesentlich.

Es ist vorteilhaft, wenn die elektronisch/optischen Elemente des ersten Senders 31 und des zweiten Empfängers 52 bzw. des zweiten Senders 32 und des ersten Empfängers 51 als Baueinheiten zusammengefasst werden. In diesem Fall bilden der Laser 34, der optoelektrische Wandler 55 und der erste Richtkoppler 17 eine gemeinsam zu produzierende Einheit (Chip), die einen elektrischen Eingang, einen elektrischen Ausgang und einen optischen Anschluss für die Lichtleitfaser 15 aufweist. In analoger Weise sind der zweite Modulator 46, der Reflektor 44, der optoelektrische Wandler 53 und der zweite Richtkoppler 18 zu einer integrierten Einheit zusammenfassbar. Diese Einheiten sind nicht nur relativ preiswert produzierbar, sondern sie haben den weiteren Vorteil, dass der Anschluss im Feld über einen jeweils einzigen optischen Stecker erfolgen kann, was relativ unkritisch ist. Die sonstigen optischen Verbindungen werden durch die Integration, d.h.

durch die gemeinsame Produktion, praktisch vollständig eliminiert. Sie treten damit weder als optische Störquellen noch als die Montage behindernde Koppelstellen auf.

Die beschriebene Vorrichtung erlaubt zahlreiche Abwandlungen, von denen nachfolgend einige aufgeführt werden:

- Die Wahl der Frequenzen f1, f2, die Modulationstiefe und die Flankenform des modulierten Lichtstrahles sind unterschiedlich wählbar.
- Als Modulationsart des ersten Modulators 36 kommt jede Frequenz- oder Phasenmodulation (eines Trägers) infrage, bei der eine genügende, einheitliche Modulationstiefe des Lichtstrahles V erreichbar ist und die im ersten Empfänger 51 mit der erforderlichen Geschwindigkeit demodulierbar ist. Es ist hierbei grundsätzlich nicht nur Infomation I1 einer digitalen Informationsquelle 11 verwendbar. Die Information I1 kann vielmehr auch in analoger Form vorliegen.
- Die zweite Informationsquelle 12 kann ebenfalls entweder - wie beschrieben - digitale Information I2 liefern oder analoge. Im zweiten Fall kann vom zweiten Modulator 46 zur Modulation des rücklaufenden Lichtstrahles R Amplitudenmodulation oder auch Frequenzmodulation angewendet werden.
- Als Filter 56 kann ein einfacher Tiefpass verwendet werden, der den gesamten Bereich der höheren Frequenzen sperrt.
- Die digitalen Bittakte T1, T2 der beiden Informationsquellen 11, 12 können gleich oder auch beliebig verschieden gewählt sein.
- Der erste Modulator 36 kann entweder in direkter Modulation die Lichtleistung des Lasers 34 elektrisch beeinflussen. Er kann aber auch als externer Modulator das Gleichlicht des Lasers elektrooptisch beeinflussen. Im letzteren Fall kann der Modulator 36 als weiterer Richtkoppler ausgebildet sein, dessen Kopplungsgrad für die Modulation elektrisch gesteuert wird. In diesem Fall entsprechen sich dann die beiden Modulatoren 36 und 46.
- Als Reflektor 44 kann z.B. eine Goldschicht auf dem polierten Ende einer Lichtleitfaser dienen. Der Reflektor 44 kann aber auch zusammen mit dem zweiten Modulator 46 eine einzige Einheit bilden, d.h. als reflektierender Modulator ausgebildet sein. Als Beispiel für eine solche Einheit sei ein reflektierendes Mach-Zehnder-Interferometer genannt. Fig. 2 zeigt eine andere, besonders elegante Einheit der genannten Art. Diese besteht im wesentlichen aus einem Richtkoppler 61 mit festem Teilungsverhältnis, dessen beide Verzweigungs-Ein/Ausgänge durch eine Lichtleitfaser 63 schleifenförmig miteinander verbunden sind. In die Faserschleife eingefügt ist ein optischer Modulator 65, dessen elektrische Steuerelektrode durch einen Pfeil 66 angedeutet ist. In die Faser 63 eingefügt ist weiter ein optischer Isolator 67, der in Art einer Diode dafür sorgt, dass nur in einer der beiden möglichen Richtungen Licht durch die Faser 63 fliesst.

- Die Art der Lichtleitfaser 15 und deren Länge ist nach praktischen Gesichtspunkten wählbar.
- Bezüglich der Informationsquelle 11, 12 und Informationssenken 21, 22 gibt es keine wesentlichen Einschränkungen. Diese Quellen können - wie bereits erwähnt - digitale oder analoge Information abgeben. Auf der Seite des ersten Empfängers 51 und des zweiten Senders 32 lassen sich mit Vorteil Einheiten mit geringem Leistungsverbrauch einsetzen, z.B. solche, die durch eine Batteriespeisung betreibbar sind. In diesem Fall können diese Einheiten einer abgesetzten Teilnehmerstation angehören, die unterbruchlos und gepuffert durch eine Batterie mit einer Zentralstelle verbunden ist.
- Die Vorrichtung kann zusammen mit einer anderen optischen Übertragungseinrichtung über die gleiche, einzige Faser im Wellenlängenmultiplex betrieben werden. Dies zeigt Fig. 3. Die andere Übertragungseinrichtung umfasst einen dritten Sender 71 und einen dritten Empfänger 73. Diese sind mit einer dritten Informationsquelle 111 bzw. einer dritten Informationssenke 121 verbunden. Weiter sind sie über zwei Wellenlängen-Multiplexer 75, 76 an die Lichtleitfaser 15 angeschlossen. Die Einheiten arbeiten bei einer ersten Wellenlänge λ1 und dienen beispielsweise zur Verteilung von Fernsehbildern.

Die Einheiten der vorgängig beschriebenen Vorrichtung arbeiten bei einer abweichenden, zweiten Wellenlänge λ2 und sind ebenfalls über die Multiplexer 75, 76 an die Faser 15 angeschlossen. Als Wellenlängen λ1, λ2 kommen beispielsweise 1,5 bzw. 1,3 $\mu$m infrage.

**Patentansprüche**

1. Vorrichtung zur bidirektionalen, zeitgleichen Übertragung von Information (I1, I2) über eine einzige Lichtleitfaser (15),
   - mit Richtkopplern (17, 18), die an den Enden der Lichtleitfaser (15) in diese eingefügt sind,
   - mit ersten und zweiten Sendern (31, 32) und Empfängern (51, 52) für die eine und die andere Übertragungsrichtung, die an die Richtkoppler (17, 18) angeschlossen sind und die die Quellen (11, 12) und Senken (21, 22) der Information (I1, I2) mit der Lichtleitfaser (15) verbinden,
* wobei dem ersten Sender (31) ein Laser (34) zur Erzeugung und ein erster Modulator (36) zum Modulieren eines ersten Lichtstrahles (V) zugeordnet sind,
* wobei dem zweiten Sender (32) ein Reflektor (44) zur Umkehrung des ersten Lichtstrahles (V) und damit zur Bildung eines zweiten Lichtstrahles (R) und ein zweiter Modulator (46) zum Modulieren dieses Strahles (R) zugeordnet sind,
* wobei die Modulationsfrequenz des ersten Modulators (36) wesentlich höher ist als die Modulationsfrequenz des zweiten Modulators (46), wobei beide Modulatoren (36, 46) die Intensität des zugeordneten Lichtstrahles (V, R) beeinflussen und wobei optoelektrische Wandler (53, 55) zum Umwandeln der optischen Signale in elektrische Signale dienen,

dadurch gekennzeichnet,
- dass der erste Modulator (36) so ausgebildet ist, dass er aus dem ersten Licht-strahl (V) durch Intensitätsmodulation ei-nen Träger bildet, dem die erste zu übertragende Information (I1) in Form einer Frequenz- oder Phasenmodulation aufmoduliert ist,
- dass dem ersten Empfänger (51) ein Demodulator (54) zugeordnet ist zum De-modulieren der übertragenen ersten In-formation (I1), und
- dass dem zweiten Empfänger (52) ein Filter (56) zugeordnet ist, das ausgebildet ist zum Sperren des Frequenzbereiches des Trägers.

2. Vorrichtung nach Anspruch 1,
dadurch gekennzeichnet,
- dass die erste Informationsquelle (11) digitale Information (I1) abgibt, und
- dass der erste Modulator (36) zum Modulieren des ersten Lichtstrahles (V) so ausgebildet ist, dass den beiden logischen Werten 0 und 1 der digitalen Infor-mation (I1) zwei unterschiedliche Fre-quenzen (f1, f2) zugeordnet sind, deren Mittelwert die Frequenz des Trägers bildet.

3. Vorrichtung nach Anspruch 1,
dadurch gekennzeichnet,
- dass die erste Informationsquelle (11) analoge Information (I1) abgibt, und

- dass der erste Modulator (36) zum Modulieren des ersten Lichtstrahles (V) so ausgebildet ist, dass eine mittlere Träg-erfrequenz durch die Information fre-quenzmoduliert wird.

4. Vorrichtung nach Anspruch 1,
dadurch gekennzeichnet,
dass das Filter (56) und der Demodulator (54) als elektrisch wirkende Einheiten ausgebildet sind, die zugeordnet den optoelektrischen Wandlern (55, 53) der Empfänger (52, 51) nachgeschaltet sind.

5. Vorrichtung nach Anspruch 4,
dadurch gekennzeichnet,
dass das Filter (56) ein Tiefpass ist.

6. Vorrichtung nach Anspruch 2,
dadurch gekennzeichnet,
dass die Bittakte (T1, T2) der zu übertragenden Informationen (I1, I2) für beide Übertragungsrichtungen gleich sind.

7. Vorrichtung nach Anspruch 2,
dadurch gekennzeichnet,
dass die Bittakte (T1, T2) der zu übertragenden Informationen (I1, I2) für die beiden Übertragungsrichtungen verschieden sind.

8. Verwendung der Vorrichtung nach Anspruch 1 in einem Kabelverteilnetz zum Datenaustausch zwischen einer Zentralstation und einer periphären Teilnehmereinheit, wobei ein generell zu verteilendes Signal bei einer ersten optischen Wellenlängen (λ1) übertragen wird, und wobei der erste (V) und der zweite Lichtstrahl (R) eine gemeinsame zweite, abweichende op-tische Wellenlänge (λ2) aufweisen.

**Fig. 1**

**Fig. 2**

**Fig. 3**